# EUROPEAN PATENT SPECIFICATION

(11) **EP 4 084 160 B1**
(45) Date of publication and mention of the grant of the patent: **01.10.2025**
(21) Application number: 20905778.5
(22) Date of filing: 07.08.2020
(51) Int. Cl.: H01M 8/0247, H01M 8/0258, H01M 8/10

(54) **SEPARATOR FOR FUEL BATTERY**
SEPARATOR FÜR EINE BRENNSTOFFZELLE
SÉPARATEUR DE BATTERIE DE PILES À COMBUSTIBLE

(30) Priority: 24.12.2019 JP 2019232195
(43) Date of publication of application: 02.11.2022
(73) Proprietor: Toyota Shatai Kabushiki Kaisha, Kariya-shi, Aichi 448-8666 (JP)
(72) Inventor: SHINOZAKI, Yoshinori, Kariya-shi, Aichi 448-8666 (JP); FUTAMI, Satoshi, Kariya-shi, Aichi 448-8666 (JP)
(74) Representative: Westphal, Mussgnug & Partner Patentanwälte mbB
(86) International application number: PCT/JP2020/030433
(87) International publication number: WO 2021/131138

(56) References cited:
- JP-A- 2002 025 586
- JP-A- 2009 048 775
- JP-A- 2011 113 806
- JP-A- 2019 139 929
- US-A1- 2005 244 699
- US-A1- 2015 333 357
- US-B2- 6 709 781
- US-B2- 8 012 645

## Description

### TECHNICAL FIELD

The present disclosure relates to a separator for a fuel cell.

### BACKGROUND ART

Conventionally, polymer electrolyte fuel cells include a stack in which cells are stacked. Each cell includes a power generation portion and two metal separators. The power generation portion includes a membrane electrode assembly. The separators include projections and recesses that are alternately arranged. The separators hold the power generation portion. Refer to, for example, Patent Literature 1.

A gas passage is defined by the projections and the recesses between each separator and the power generation portion of a cell. Fuel gas and oxidizing gas are supplied through the gas passages. Fuel gas (e.g., hydrogen) and oxidizing gas (e.g., oxygen) are supplied to each gas passage. Thus, oxidant gas electrochemically reacts with fuel gas in the membrane electrode assembly so as to generate power.

### CITATION LIST

### Patent Literature

Patent Literature 1: Japanese Laid-Open Patent Publication No. 2019-204659

### SUMMARY OF INVENTION

### Problems that the Invention is to Solve

The water generated through the electrochemical reaction (hereinafter referred to as generated water) flows into a cathode-side gas passage, that is, a gas passage to which oxidizing gas is supplied. Such generated water is discharged to the outside by the pressure of the oxidizing gas flowing through the gas passage. However, an increase in the amount of generated water may potentially cause the gas passage to be closed by the generated water and excessively increase the pressure drop of the oxidizing gas.

It is an objective of the present disclosure to provide a separator for a fuel cell capable of improving the performance of discharging generated water.

### Solution to Problem

A separator for a fuel cell that achieves the above-described objective is configured to contact a power generation portion of the fuel cell. The separator includes protrusions that extend in parallel and are spaced apart from each other. The protrusions are configured to contact the power generation portion. The protrusions each include a contact surface configured to contact the power generation portion. The separator also includes gas passage portions arranged between two adjacent ones of the protrusions such that reactant gas flows through the gas passage portions. An upstream side and a downstream side are defined with reference to a direction in which reactant gas flows through the gas passage portions. the protrusions each include a downstream end. The contact surfaces of the protrusions each include a first groove extending along an extending direction of the protrusions. The downstream end of each of the protrusions includes a separation surface. The separation surface is continuous with the contact surface on the downstream side and separated from the power generation portion. The separation surface includes a second groove that is continuous with the first groove.

In this structure, generated water generated through the generation of power in a fuel cell flows into the first groove, which is located in the contact surface of the protrusion in contact with the power generation portion, and moves toward the downstream side. The generated water that has reached the downstream end of the first groove flows into the second groove in the separation surface, which is continuous with the contact surface and separated from the power generation portion, and smoothly moves toward the downstream side. This increases the performance of discharging generated water.

In the separator for the fuel cell, it is preferred that the separation surface be an inclined surface inclined such that the downstream side of the separation becomes farther from the power generation portion.

In this structure, the inclination of the inclined surface allows the generated water that has flowed into the second groove to smoothly move toward the downstream side. This allows the generated water to be smoothly discharged and thus further increases the performance of discharging generated water.

In the separator for the fuel cell, it is preferred that the protrusions be arranged in series and spaced apart from each other and that the second groove be arranged in the separation surface of each of the protrusions.

In this structure, the protrusions are arranged in series and spaced apart from each other. Thus, the gas passage portions adjacent to two protrusions arranged in series are connected to each other through a section between the two protrusions. This improves the performance of distributing reactant gas. Further, since the downstream end of each protrusion includes the second groove, the generated water that has flowed into the first groove of each protrusion is discharged through the second groove toward the downstream side. Accordingly, the performance of distributing reactant gas and the performance of discharging generated water are both improved.

In the separator for the fuel cell, it is preferred that the contact surface include a third groove that connects the first groove to the gas passage portions.

In this structure, the contact surface includes the third groove that connects the first groove to the gas passage portions. Thus, a portion of the generated water that has flowed from the power generation portion into the first groove flows toward the second groove whereas another portion of the generated water flows through the third grooves toward the gas passage portions. Thus, the generated water that has flowed from the power generation portion to the first groove flows toward the downstream side through the second groove and the gas passage portions. This further improves the performance of discharging generated water. In addition, such an arrangement of multiple discharge passages for generated water prevents generated water from remaining in a part of the separator.

In the separator for the fuel cell, it is preferred that the third groove be one of third grooves arranged in the contact surface and that the third groove accounts for a smaller proportion of the contact surface on the downstream side than on the upstream side.

The generated water in the power generation portion flows through the gas passage portions from the upstream side toward the downstream side. Thus, the generated water easily remains in the parts of the passage portions closer to the downstream side.

In the above-described structure, the third grooves account for a smaller proportion of the contact surface on the downstream side than on the upstream side. Thus, the amount of the generated water flowing from the third grooves from the first groove toward the gas passage portion is smaller on the downstream side than on the upstream side. Accordingly, the generated water on the upstream side in the first groove is easily discharged through the third grooves toward the gas passage portions, rather than flowing toward the downstream side. Further, the generated water on the downstream side in the first groove is discharged through the second groove toward the downstream side more easily than through the third grooves toward the gas passage portions. These configurations prevent situations in which an excessive amount of generated water flows into the first groove so that the first groove is closed by the generated water, and prevents an excessive amount of generated water from remaining on the downstream side of the gas passage portions. Accordingly, when the generated water in the first groove is discharged, the amount of the generated water discharged through the third grooves and the amount of the generated water discharged through the second groove can be adjusted by changing the proportion of the third grooves accounting for the contact surface. As a result, generated water is efficiently discharged.

### Advantageous Effects of Invention

The separator for the fuel cell according to the present disclosure improves the performance of discharging generated water.

### BRIEF DESCRIPTION OF DRAWINGS

Fig. 1 is a cross-sectional view of a separator for a fuel cell according to an embodiment, mainly showing cells, each including the separator.
Fig. 2 is a plan view of the second separator according to the embodiment.
Fig. 3 is a perspective view showing portions of the protrusions on the upstream side in the second separator according to the embodiment.
Fig. 4 is a perspective view showing downstream ends of the protrusions in the second separator according to the embodiment.
Fig. 5 is a perspective view showing protrusions of the second separator in a first modification.
Fig. 6 is a perspective view showing protrusions of the second separator in a second modification.
Fig. 7 is a perspective view showing protrusions of the second separator in a third modification.

### DESCRIPTION OF EMBODIMENTS

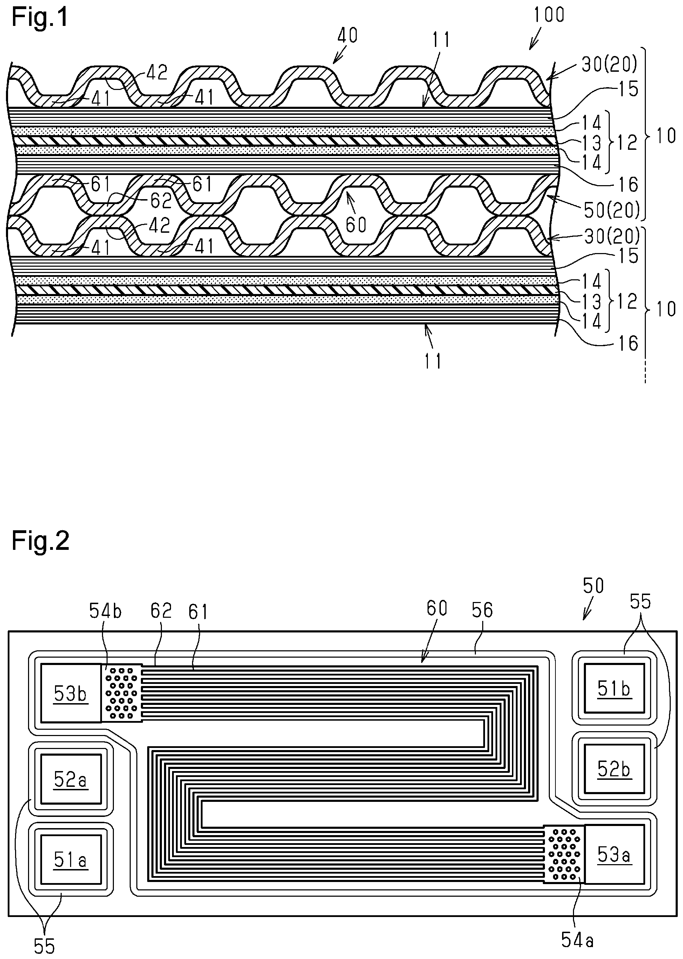

A separator for a fuel cell according to an embodiment will now be described with reference to Figs. 1 to 4.

For illustrative purposes, some parts of the structures in the drawings may be exaggerated or simplified. Further, the dimensional ratios of portions may be different among the drawings.

As shown in Fig. 1, a separator (hereinafter referred to as the separator 20) for a fuel cell of the present embodiment is used for a stack 100 of a polymer electrolyte fuel cell. The separator 20 is a collective term for a first separator 30 and a second separator 50, which will be described later.

The stack 100 includes a structure in which cells 10 are stacked. Each cell 10 includes a power generation portion 11 held by the first separator 30, which is on an anode side, and the second separator 50, which is on a cathode side.

The power generation portion 11 includes a membrane electrode assembly 12, an anode-side gas diffusion layer 15, and a cathode-side gas diffusion layer 16. The anode-side gas diffusion layer 15 and the cathode-side gas diffusion layer 16 hold the membrane electrode assembly 12. The anode-side gas diffusion layer 15 is located between the membrane electrode assembly 12 and the first separator 30. The cathode-side gas diffusion layer 16 is located between the membrane electrode assembly 12 and the second separator 50. The anode-side gas diffusion layer 15 and the cathode-side gas diffusion layer 16 are made of carbon fibers.

The electrolyte membrane assembly 12 includes an electrolyte membrane 13, which is made of a solid polymer material that has an excellent proton conductivity in a wet state, and two catalytic electrode layers 14 that hold the electrolyte membrane 13. Each catalytic electrode layer 14 supports a catalyst (e.g., platinum) in order to expedite the electrochemical reaction of reactant gas in the fuel cell.

The first separator 30 is formed by pressing a metal (e.g., stainless steel) plate. The portion of the first separator 30 opposing the power generation portion 11 includes a distributing section 40 that distributes reactant gas to the entire power generation portion 11. The distributing section 40 includes protrusions 41 and gas passage portions 42. The protrusions 41 are configured to extend in parallel and be spaced apart from each other. Further, the protrusions 41 are configured to contact the power generation portion 11. The gas passage portions 42 are configured to be arranged between two adjacent ones of the protrusions 41 such that reactant gas flows through the gas passage portions 42. Each protrusion 41 is in contact with the anode-side gas diffusion layer 15. The protrusions 41 and the gas passage portions 42 extend in the direction that is orthogonal to the sheet of Fig. 1.

The second separator 50 is formed by pressing a metal (e.g., stainless steel) plate. The portion of the second separator 50 opposing the power generation portion 11 includes a distributing section 60 that distributes reactant gas to the entire power generation portion 11. The distributing section 60 includes protrusions 61 and gas passage portions 62. The protrusions 61 are configured to extend in parallel and be spaced apart from each other. Further, the protrusions 61 are configured to contact the power generation portion 11. The gas passage portions 62 are configured to be arranged between two adjacent ones of the protrusions 61 such that reactant gas flows through the gas passage portions 62. Each protrusion 61 is in contact with the cathode-side gas diffusion layer 16. The protrusions 61 and the gas passage portions 62 extend in the direction that is orthogonal to the sheet of Fig. 1.

The section of the first separator 30 defined by each gas passage portion 42 of the first separator 30 and the anode-side gas diffusion layer 15 includes a fuel gas passage through which fuel gas (reactant gas) flows. The section of the second separator 50 defined by each gas passage portion 62 of the second separator 50 and the cathode-side gas diffusion layer 16 is an oxidizing gas passage through which oxidizing gas (reactant gas) flows. In the present embodiment, the fuel gas passing through the fuel gas passage is hydrogen, and the oxidizing gas flowing through the oxidizing gas passage is air.

The bottom of each gas passage portion 42 of the first separator 30 and the bottom of the corresponding gas passage portion 62 of the second separator 50 are joined to each other through, for example, laser welding. The section defined by the rear surface of each protrusion 41 of the first separator 30 and the rear surface of the corresponding protrusion 61 of the second separator 50 is a coolant passage through which coolant flows.

In the stack 100 of the present embodiment, the fuel gas supplied to the fuel gas passage electrochemically reacts with the oxidizing gas supplied to the oxidizing gas passage so as to generate power. This generates water (hereinafter referred to as generated water) through electrochemical reaction of the fuel gas and oxygen (i.e., hydrogen and oxygen) in the cathode-side electrode catalytic electrode layer 14 and the cathode-side gas diffusion layer 16. The pressure of the oxidizing gas flowing through each gas passage portion 62 of the second separator 50 moves such a generated water toward the downstream side so that the generated water is discharged to the outside through an oxidizing gas discharge manifold 53b (described later).

The second separator 50 will now be described in detail.

As shown in Fig. 2, the second separator 50 has a substantially rectangular shape with long sides and short sides.

In the following description, the direction in which the long sides of the second separator 50 extend is referred to as the longitudinal direction. The direction in which the short sides of the second separator 50 extend and which is orthogonal to the longitudinal direction is referred to as the width direction. The right side and the left side in Fig. 2 are referred to as one side (first side) in the longitudinal direction and the other side (second side) in the longitudinal direction, respectively. The upper side and the lower side in Fig. 2 are referred to as one side (first side) in the width direction and the other side (second side) in the width direction, respectively. The direction in which the protrusions 61 of the second separator 50 extend is simply referred to as the extending direction. The direction in which the protrusions 61 are arranged is simply referred to as the arrangement direction.

The end of the second separator 50 on the first side in the longitudinal direction includes a fuel gas discharge manifold 51b, a coolant discharge manifold 52b, and an oxidizing gas supply manifold 53a in this order from the first side in the width direction. The end of the second separator 50 on the second side in the longitudinal direction includes a fuel gas supply manifold 51a, a coolant supply manifold 52a, and the oxidizing gas discharge manifold 53b in this order from the second side in the width direction.

Fuel gas is supplied through the fuel gas supply manifold 51a to the fuel gas passage and discharged out of the fuel gas discharge manifold 51b. Coolant is supplied through the coolant supply manifold 52a to the coolant gas passage and discharged out of the coolant discharge manifold 52b. Oxidizing gas is supplied through the oxidizing gas supply manifold 53a to the oxidizing gas passage and discharged out of the oxidizing gas discharge manifold 53b.

The distributing section 60 is located at the middle of the second separator 50. The distributing section 60 of the present embodiment is connected to the oxidizing gas supply manifold 53a by a diffusing portion 54a and connected to the oxidizing gas discharge manifold 53b by a diffusing portion 54b. The distributing section 60 extends along the longitudinal direction and is folded back twice. Thus, the protrusions 61 and the gas passage portions 62 extend along the longitudinal direction and are folded back twice.

The diffusing portion 54a diffuses the reactant gas that flows toward the distributing section 60. The diffusing portion 54b diffuses the reactant gas that flows toward the oxidizing gas discharge manifold 53b. The diffusing portions 54a, 54b each include hemispherical protuberances that protrude in the thickness direction of the second separator 50.

In the following description, the upstream side and the downstream side are simply defined with respect to the direction in which reactant gas flows through the gas passage portions 62, which define the oxidizing gas passages.

A seal frame 55 is arranged on the outer side of each of the manifolds 51a, 51b, 52a, 52b. Each seal frame 55 individually surrounds the corresponding one of the manifolds 51a, 51b, 52a, 52b. A seal frame 56 is arranged on the outer side of the oxidizing gas supply manifold 53a, the diffusing portion 54a, the distributing section 60, the diffusing portion 54b, and the oxidizing gas discharge manifold 53b to collectively surround these components. The seal frames 55, 56 protrude in the thickness direction of the second separator 50. The seal frames 55, 56 limit leakage of reactant gas by contacting another cell 10 that is adjacent to the seal frames 55, 56.

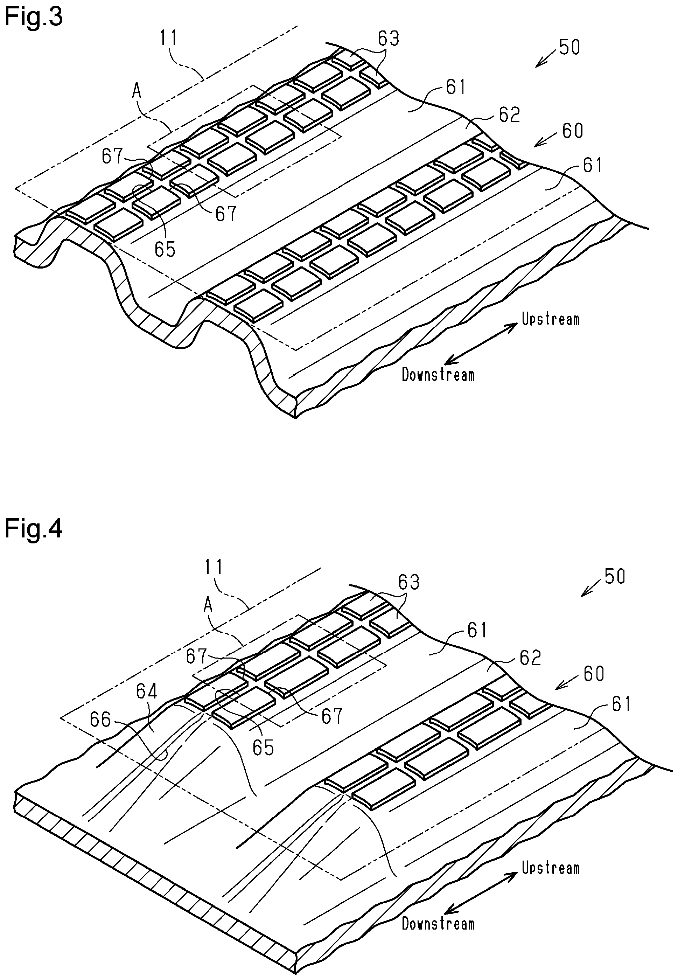

As shown in Figs. 3 and 4, each protrusion 61 includes a contact surface 63 that is configured to contact the power generation portion 11 (more specifically, contact the cathode-side gas diffusion layer 16). The contact surface 63 includes a first groove 65 that extends along the extending direction. The first groove 65 of the present embodiment is arranged along the entire extending direction. That is, the first groove 65 extends from an upstream end to a downstream end of each protrusion 61.

As shown in Fig. 4, the downstream end of each protrusion 61 includes an inclined surface 64. The inclined surface 64 is a separation surface that is continuous with the contact surface 63 on the downstream side and is separated from the power generation portion 11. The inclined surface 64 is inclined such that the downstream side of the inclined surface 64 becomes farther from the power generation portion 11. In other words, the inclined surface 64 is inclined such that the downstream side of the inclined surface 64 becomes closer to the side opposite to the power generation portion 11. The inclined surface 64 is smoothly continuous with the diffusing portion 54b. The upstream end of each protrusion 61 includes an inclined surface (not shown) of which the upstream side is inclined so as to become farther from the power generation portion 11.

The inclined surface 64 includes a second groove 66. The second groove 66 is continuous with the first groove 65 and extends toward the downstream side. The second groove 66 is arranged in the entire inclined surface 64 in the extending direction.

The contact surface 63 includes third grooves 67 that connect the first groove 65 to the gas passage portions 62. More specifically, two third grooves 67 are spaced apart from each other in the extending direction such that the third grooves 67 branch from the first groove 65 toward the opposite sides in the arrangement direction and connect to the gas passage portions 62 on the opposite sides. The third grooves 67 each extend in a direction orthogonal to the first groove 65 and are located on the same position in the extending direction. The width and depth of each third groove 67 in the present embodiment are the same over the entire protrusion 61.

As shown in Figs. 3 and 4, the third grooves 67 accounts for a smaller proportion of the contact surface 63 on the downstream side than on the upstream side. Fig. 3 shows the portion of each protrusion 61 on the upstream side, and Fig. 4 shows the downstream end of each protrusion 61. More specifically, the number of the third grooves 67 in a predetermined range A, shown by the alternate long and short dashed line in Figs. 3 and 4, is smaller on the downstream side than on the upstream side. In the present embodiment, the distance between the third grooves 67 in the extending direction is set to be larger on the downstream side than on the upstream side so that the number of the third grooves 67 is smaller on the downstream side than on the upstream side.

The operation of the present embodiment will now be described.

Generated water, generated through the generation of power in a fuel cell, flows into the first groove 65, which is located in the contact surface 63 of each protrusion 61 of the second separator 50 in contact with the power generation portion 11. Further, the generated water moves toward the downstream side. Then, the generated water that has reached the downstream end of the first groove 65 flows into the second groove 66, which is located in the inclined surface 64 continuous with the contact surface 63. The inclination of the inclined surface 64 allows the generated water to smoothly move toward the downstream side.

The advantages of the embodiment will now be described.
(1) The contact surface 63 in contact with the power generation portion 11 of the protrusion 61 of the second separator 50 includes the first groove 65, which extends along the extending direction of the protrusion 61. The downstream end of each protrusion 61 includes the inclined surface 64, which is continuous with the contact surface 63 on the downstream side. The inclined surface 64 is inclined such that the downstream side of the inclined surface 64 becomes farther from the power generation portion 11. The inclined surface 64 includes the second groove 66, which is continuous with the first groove 65.

Such a structure produces the above-described operation and thus improves the performance of discharging generated water.

(2) The contact surface 63 includes the third grooves 67, which connect the first groove 65 to the gas passage portions 62.

In this structure, since the contact surface 63 includes the third grooves 67 connecting the first groove 65 to the gas passage portions 62, a portion of the generated water that has flowed from the power generation portion 11 into the first groove 65 flows toward the second groove 66 whereas another portion of the generated water flows through the third grooves 67 toward the gas passage portions 62. Thus, the generated water that has flowed from the power generation portion 11 to the first groove 65 flows toward the downstream side through the second groove 66 and the gas passage portions 62. This further improves the performance of discharging generated water. In addition, such an arrangement of multiple discharge passages for generated water prevents the generated water from remaining in a part of the second separator 50.

(3) The third grooves 67 account for a smaller proportion of the contact surface 63 on the downstream side than on the upstream side.

The generated water in the power generation portion 11 flows through the gas passage portions 62 from the upstream side toward the downstream side. Thus, the generated water easily remains in the parts of the passage portions 62 closer to the downstream side.

In the above-described structure, the third grooves 67 account for a smaller proportion of the contact surface 63 on the downstream side than on the upstream side. Thus, the amount of the generated water flowing from the third grooves 67 from the first groove 65 toward the gas passage portions 62 is smaller on the downstream side than on the upstream side. Accordingly, the generated water on the upstream side in the first groove 65 is easily discharged toward the gas passage portions 62 through the third grooves 67, rather than flowing toward the downstream side. Further, the generated water on the downstream side in the first groove 65 is discharged through the second groove 66 toward the downstream side more easily than through the third grooves 67 toward the gas passage portions 62. These configurations prevent situations in which an excessive amount of generated water flows into the first groove 65 so that the first groove 65 is closed by the generated water, and prevents an excessive amount of generated water from remaining on the downstream side of the gas passage portions 62. Accordingly, when the generated water in the first groove 65 is discharged, the amount of the generated water discharged through the third grooves 67 and the amount of the generated water discharged through the second groove 66 can be adjusted by changing the proportion of the third grooves 67 accounting for the contact surface 63. As a result, generated water is efficiently discharged.

### Modifications

The present embodiment may be modified as follows. The present embodiment and the following modifications can be combined as long as they remain technically consistent with each other.

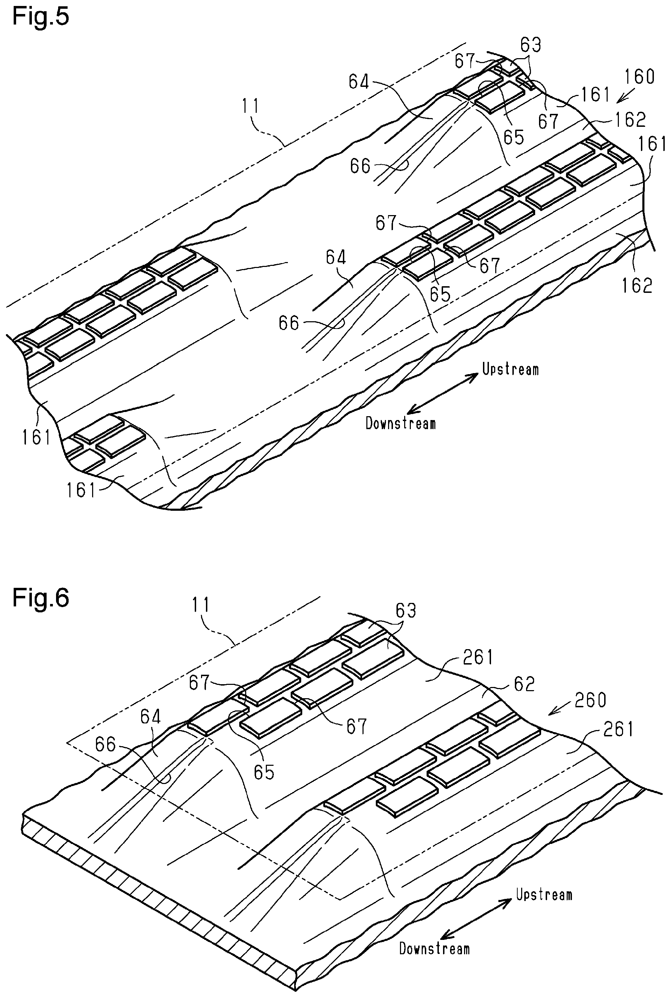

In the following first to third modifications respectively shown in Figs. 5 to 7, the same components as those in the above-described embodiment are given the same reference numerals. Also, the components that correspond to those in the above-described embodiment are given reference numerals obtained by adding 100, 200, and 300 to the reference numerals of the components of the above-described embodiment. Such components will not be described in detail.

As shown in Fig. 5, protrusions 161 may be arranged in series and spaced apart from each other. The inclined surface 64 (separation surface) of each protrusion 161 includes the second groove 66. In such a structure, since the protrusions 161 are arranged in series and spaced apart from each other, the gas passage portions 162 adjacent to two protrusions 161 arranged in series are connected to each other through a section between the two protrusions 161. This improves the performance of distributing reactant gas. Further, since the downstream end of each protrusion 161 includes the second groove 66, the generated water that has flowed into the first groove 65 of each protrusion 161 is discharged through the second groove 66 toward the downstream side. Accordingly, the performance of distributing reactant gas and the performance of discharging generated water are both improved.

As shown in Fig. 6, in a pair of third grooves 67, the third groove 67 on one side in the arrangement direction and the third groove 67 on the other side in the arrangement direction may each be located at a different position in the extending direction.

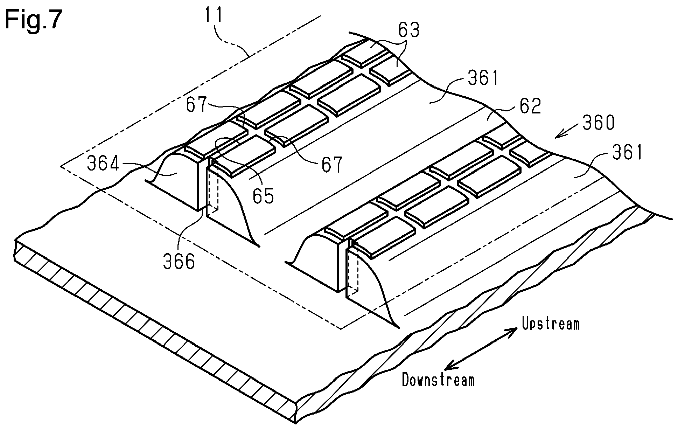

As shown in Fig. 7, the inclined surface 64 may be omitted, and protrusions 361 each including a separation surface 364 that is orthogonal to the power generation portion 11 may be provided. In this case, each separation surface 364 includes a second groove 366 that extends in a direction orthogonal to the power generation portion 11.

The proportion of the third grooves 67 accounting for the contact surface 63 may gradually become smaller from the upstream side toward the downstream side or may become smaller from the upstream side toward the downstream side in a stepwise manner.

The proportion of the third grooves 67 accounting for the contact surface 63 may be the same along the entire direction in which reactant gas flows.

The width and depth of each third groove 67 in the present embodiment do not have to be the same over the entire protrusion 61. Instead, for example, the width and depth of each third groove 67 may be smaller on the downstream side than on the upstream side. This produces an advantage similar to the above-described advantage (3).

Each third groove 67 does not have to extend in the direction orthogonal to the first groove 65. Instead, each third groove 67 may extend in a direction intersecting the first groove 65 at an angle. For example, as compared with when each third groove 67 extends in the direction orthogonal to the first groove 65, the third groove 67 is provided over a longer range when the third groove 67 is extended and inclined with respect to the first groove 65 such that the third groove 67 becomes closer to the downstream side as the third groove 67 becomes closer to the gas passage portions 62.

One of two third grooves 67 may be omitted.

The third grooves 67 may be omitted.

Multiple first grooves 65 may be located in one contact surface 63 in the arrangement direction. In this case, the first grooves 65 may merge at a point in the protrusion 61 in the extending direction.

In one contact surface 63, multiple first grooves 65 may be arranged in series and spaced apart from each other in the extending direction. In this case, the second groove 66 is connected to one of the first grooves 65 that is located on the most downstream side.

The first groove 65 may be extended and inclined with respect to the extending direction.

The first groove 65, the second groove 66, and the third groove 67 may each have a right-angle corner or a curved corner.

The first separator 30 may include the first groove 65, the second groove 66, and the third groove 67. That is, the first separator 30 may have the same shape as the second separator 50.

The separator 20 does not have to be formed using a metal plate. Instead, the separator 20 may be made of, for example, a carbon-containing material.

### REFERENCE SIGNS LIST

11) Power Generation Portion
50) Second Separator
61) Protrusion
62) Gas Passage Portion
63) Contact Surface
64) Inclined Surface
65) First Groove
66) Second Groove
67) Third Groove

## Claims

1. A separator for a fuel cell, the separator being configured to contact a power generation portion of the fuel cell, the separator comprising:
protrusions that extend in parallel and are spaced apart from each other, the protrusions being configured to contact the power generation portion, and the protrusions each including a contact surface configured to contact the power generation portion; and
gas passage portions arranged between two adjacent ones of the protrusions such that reactant gas flows through the gas passage portions, wherein
an upstream side and a downstream side are defined with reference to a direction in which reactant gas flows through the gas passage portions,
the protrusions each include a downstream end,
the contact surfaces of the protrusions each include a first groove extending along an extending direction of the protrusions,
the downstream end of each of the protrusions includes a separation surface, the separation surface being continuous with the contact surface on the downstream side and separated from the power generation portion, and
the separation surface includes a second groove that is continuous with the first groove.

2. The separator for the fuel cell according to claim 1, wherein the separation surface is an inclined surface inclined such that the downstream side of the separation surface becomes farther from the power generation portion.

3. The separator for the fuel cell according to claim 1 or 2, wherein
the protrusions are arranged in series and spaced apart from each other, and
the second groove is arranged in the separation surface of each of the protrusions.

4. The separator for the fuel cell according to any one of claims 1 to 3, wherein the contact surface includes a third groove that connects the first groove to the gas passage portions.

5. The separator for the fuel cell according to claim 4, wherein
the third groove is one of third grooves arranged in the contact surface, and
the third groove accounts for a smaller proportion of the contact surface on the downstream side than on the upstream side.

## Patentansprüche

1. Separator für eine Brennstoffzelle, wobei der Separator dazu ausgebildet ist, einen Leistungserzeugungsabschnitt der Brennstoffzelle zu kontaktieren, wobei der Separator aufweist:
Vorsprünge, die sich parallel erstrecken und voneinander beabstandet sind, wobei die Vorsprünge dazu ausgebildet sind, den Leistungserzeugungsabschnitt zu kontaktieren, und wobei die Vorsprünge jeweils eine Kontaktfläche, die dazu ausgebildet ist, den Leistungserzeugungsabschnitt zu kontaktieren, enthalten; und
Gasdurchgangsabschnitte, die zwischen zwei benachbarten der Vorsprünge so angeordnet sind, dass Reaktionsgas durch die Gasdurchgangsabschnitte strömt, wobei
eine stromaufwärtige Seite und eine stromabwärtige Seite in Bezug auf eine Richtung, in der Reaktionsgas durch die Gasdurchgangsabschnitte strömt, definiert sind,
die Vorsprünge jeweils ein stromabwärtiges Ende enthalten,
die Kontaktflächen der Vorsprünge jeweils eine erste Nut, die sich entlang einer Erstreckungsrichtung der Vorsprünge erstreckt, enthalten,
das stromabwärtige Ende eines jeden der Vorsprünge eine Trennfläche enthält, wobei die Trennfläche mit der Kontaktfläche auf der stromabwärtigen Seite durchgehend ist und von dem Leistungserzeugungsabschnitt getrennt ist, und
die Trennfläche eine zweite Nut, die mit der ersten Nut durchgehend ist, enthält.

2. Separator für die Brennstoffzelle nach Anspruch 1, wobei die Trennfläche eine geneigte Fläche ist, die so geneigt ist, dass die stromabwärtige Seite der Trennfläche weiter von dem Leistungserzeugungsabschnitt entfernt ist.

3. Separator für die Brennstoffzelle nach Anspruch 1 oder 2, wobei
die Vorsprünge in Reihe angeordnet und voneinander beabstandet sind und
die zweite Nut in der Trennfläche eines jeden der Vorsprünge angeordnet ist.

4. Separator für die Brennstoffzelle nach einem der Ansprüche 1 bis 3, wobei die Kontaktfläche eine dritte Nut, die die erste Nut mit den Gasdurchgangabschnitten verbindet, enthält.

5. Separator für die Brennstoffzelle nach Anspruch 4, wobei
die dritte Nut eine von drei in der Kontaktfläche angeordneten dritten Nuten ist, und
die dritte Nut auf der stromabwärtigen Seite einen kleineren Anteil der Kontaktfläche als auf der stromaufwärtigen Seite ausmacht.

## Revendications

1. Un séparateur de pile à combustible, le séparateur étant configuré pour être en contact avec une partie de production d'électricité de la pile à combustible, le séparateur comprenant :
des saillies qui s'étendent en parallèle et sont à distance les unes des autres, les saillies étant configurées pour être en contact avec la partie de production d'électricité et les saillies comprenant chacune une surface de contact, configurée pour être en contact avec la partie de production d'électricité ; et
des parties de passage de gaz disposées entre deux saillies voisines de manière à ce que du gaz réactif passe dans les parties de passage du gaz, dans lequel
un côté en amont et un côté en aval sont définis en se référant à un sens dans lequel du gaz réactif passe dans les parties de passage du gaz,
chaque saillie comprend une extrémité en aval,
les surfaces de contact des saillies comprennent chacune une première rainure s'étendant suivant une direction d'extension des saillies,
l'extrémité en aval de chacune des saillies comprend une surface de séparation, la surface de séparation étant en continue avec la surface de contact du côté en aval et séparée de la partie de production d'électricité, et
la surface de séparation comprend une deuxième rainure, qui est continue avec la première rainure.

2. Le séparateur de pile à combustible suivant la revendication 1, dans lequel la surface de séparation est une surface inclinée, inclinée de manière à ce que le côté en aval de la surface de séparation soit plus loin de la partie de production d'électricité.

3. Le séparateur de pile à combustible suivant la revendication 1 ou 2, dans lequel
les saillies sont disposées en série et à distance des unes des autres, et
la deuxième rainure est disposée dans la surface de séparation de chacune des saillies.

4. Le séparateur de pile à combustible suivant l'une quelconque des revendications 1 à 3, dans lequel la surface de contact comprend une troisième rainure, qui met la première rainure en communication avec les parties de passage de gaz.

5. Le séparateur de pile à combustible suivant la revendication 4, dans lequel
la troisième rainure est l'une des troisièmes rainures disposées dans la surface de contact, et
la troisième rainure représente une proportion de la surface de contact plus petite du côté en aval que du côté en amont.
